# EUROPEAN PATENT APPLICATION

(11) **EP 1 128 296 A2**
(43) Date of publication of application: **29.08.2001**
(21) Application number: 00128731.7
(22) Date of filing: 29.12.2000
(51) Int. Cl.: G06F 17/60, G07G 1/00

(54) **Sales system and service providing method**

(30) Priority: 25.02.2000 JP 2000048637
(71) Applicant: FUJITSU LIMITED, Kawasaki-shi, Kanagawa 211-8588 (JP)
(72) Inventor: Ohsawa, Satomi, Fujitsu Limited, Kawasaki-shi, Kanagawa 211-8588 (JP); Ho Kwan Choi, Denny, Fujitsu Limited, Kawasaki-shi, Kanagawa 211-8588 (JP)
(74) Representative: Sunderland, James Harry

(57) **Abstract**

A sales system/service providing method for providing the differentiated services to respective customers in the shop. An ordinary price and the particular price determined depending on the rank are set to each goods. The rank is set based on the shopping result information of a customer in the past and reference is made to the shopping result information of respective goods of the customer after identifying the customer at the time of shopping. The price information corresponding to the shopping result information referred is read and the payment is made based on such price information. Various service providing methods such as issuance of points. issuance of price reductions and output of messages can be provided.

## Description

### BACKGROUND OF THE INVENTION

### 1. Field of the Invention

The present invention relates to a customer service providing a method and a sales system in the point-of-sale (hereinafter "POS") system and online shopping system and, more particularly, to a customer service providing method and a sales system for providing price reductions and points depending on the amount of shopping by the customer.

The POS system will mainly be explained below and the POS system can naturally be adapted to the other various shopping systems.

### 2. Description of the Related Art

Various shops, such as supermarkets, where sellers having established a sales chain, and sellers in units of a plurality of shops/areas, such as the shopping district, are providing various services for returning profits to customers more frequently than ever.

As a typical example of such a service, the point system is well known. In the point system, points are offered to customers depending on the amount of shopping in which they engage. Thereby, various services are offered to customers in a manner such that points generated in respective transactions are accumulated and price reduction is realized depending on the points accumulated, or when the accumulated points reach the predetermined value, a note which can be used only within the shop is issued or a gift is offered.

Moreover, as an example of other services, a price reduction note is offered depending on the amount of shopping conducted by a customer. The price reduction note is issued to reduce the price as much as that printed thereon when a customer shops in the same shop on a future date. Although not illustrated, various services for returning the profit to customers can be assumed in addition to those explained above.

In these point and price reduction note systems, the service, such as price reduction, will be provided when a customer visits the shop for subsequent shopping opportunities and the shop can expect the continuous shopping of customers by providing such services.

Presently, sellers have developed the strategic policy of offering particularly preferential treatment, which is further advanced from the current customer services, to particular customers through differentiation of customers. The customers, as the object of differentiation, include so-called "loyal customers" who visit the shop frequently for shopping and the customers who spend more for purchases. Such customers are assumed to contribute significantly to the sales amount of the shop in comparison with the customers who visit the shop with a lower frequency and shop for a small money value in goods and, therefore, the shop owner is required to provide preferential treatment to the good customers. Therefore, the shop owner desires to convert these customers into regular customers by returning more loyalty to these customers in comparison with the other customers, with the hope that these good customers will continuously visit the shop for shopping in the future.

When it is realized that a customer can get more advanced services as the shopping frequency and shopping amount for the of customer becomes higher, a customer of lower shopping frequency may be motivated, in turn, to go to the shop for shopping more frequently in the future. Therefore, it is possible for the shop to expect to further increase the sales amount by increasing the shopping frequency of such customers.

Here, various services represented by such a point system have been conducted equally to all customers as the object of the service. For example, the point system will be considered here. In the ordinary point system, the points are recorded on a card or the points of each customer are accumulated and recorded in the host computer of the shop. In the latter case, a customer is requested to register his own information to the shop. In any case, the points are offered basically under the same condition so long as the customer carries a point card.

Accordingly, the current profit returning service cannot satisfy the request of recent sellers, namely, the request for offering more kinds of treatment to the ᵢidentified customers and has been insufficient for getting the regular customers and attaining improvement to the same degree.

Moreover, in the ordinary point system, service is offered based on the total amount of shopping of customer and the point offering condition does not change depending on the kinds of goods purchased by the customer.

Considering the problems explained above regarding the related art, the object of the present invention is to provide a service system which can offer more advanced services to customers by differentiating between customers.

The abovementioned problems can be solved by the present invention as will be explained below.

### SUMMARY OF THE INVENTION

The present invention may be realized with a sales system including a customer file for storing the shopping result in the past for each customer, a price file for storing the price of goods depending on the shopping result of a customer. and a processing means for reading the corresponding price of goods by referring to the customer file based on the shopping result of the customer to execute the payment based on the price of goods obtained.

Particularly, in the case of the above sales system, price information in each rank is set for respective goods (the range, such as particular brand and class of goods, may be determined as required). Therefore, the differentiated services may be provided to the customers who are making a greater contribution to the amount of sales by setting price information which results in a large reduction in price to the customers in a higher rank corresponding to the rank set to the customers based on the shopping result in the past.

As the price information for each rank explained above, various pieces of information. such as unit price of goods after price reduction, reduction amount and reduction rate or the like can be considered.

Moreover, the present invention is a sales system including a means for setting, for each kind of goods, a rank of the customer based on the shopping result of the customer in the past, a means for recording, for each customer and goods (or for each kind of goods or each brand), the rank and the service providing conditions corresponding to the rank: and a means for reading the service providing conditions corresponding to the rank of the customer to execute the process for providing the service.

In this case, the rank and corresponding service providing conditions (various conditions such as price, reduction amount and point offering rate) are characteristically set for each customer and respective goods. Therefore, more advanced services may be offered to the customers who purchase a large amount of particular goods (goods of particular kinds and goods of particular makers, etc.). Particularly, since the rank is set depending on the shopping result in the past, more advanced services may be provided to the customers depending on the number of goods purchased, the amount of shopping and the shopping frequency.

Moreover, the shopping result is collected and updated for each transaction by a user and in this case, the range of goods as the object of service may be matched with the range for collecting the shopping result or may be varied from each other. Namely, collection of shopping results can be made for respective goods and the service may be provided for a particular kind of the goods (for example, coffee or drink, etc.) purchased by the customers.

Moreover, it is also possible to select the goods as the object for providing the service from the goods regarding the goods purchased and goods such as sugar and milk, which may be consumed in relation to coffee.

It is also possible to provide the service to a customer who often purchases a certain kind of goods (coffee, for example) when the customer purchases the coffee of a particular brand manufactured by the particular maker.

In any case, since the service suitable to the shopping trend of a customer can be provided without assistance from any sales staff of the shop by setting the service providing conditions for respective goods and ranks, it is very preferable for sellers as well as for a customer. It is therefore expected that the customer will frequently visit the shop in order to purchase the goods. The present invention is not limited to the way of providing the services.

Moreover, the present invention comprises a terminal for payment, a host computer. an input means for inputting the goods information/customer information to the payment terminal, a processing means for transferring the input information to the host computer to make the payment based on the information received from the host computer, a printing means, a means for storing the shopping result information in the past of each customer to the host computer, a means for storing the goods price information and a means for referring to the shopping result information of the customer.

Moreover. the customer service is provided based on the service providing condition, which is set differently depending on the shopping result of the customer to which reference is made in the host computer.

Here, the shopping results of a customer can be collected for each particular kind of goods.

Moreover, the present invention is a sales system including a means for setting the rank of a customer based on the shopping result in the past, a means for setting the point providing condition corresponding to the customer rank, and a means for offering points corresponding to the amount of shopping and also issuing premium points to the points offered depending on the providing condition corresponding to the rank of customer.

Moreover, the present invention is a service providing method for offering a service in which contents are differentially set depending on the rank of the customer for respective goods when the customer purchases the goods with reference to the rank of respective goods of the customer offered based on the shopping result of the goods in the past on the part of the customer.

### BRIEF DESCRIPTION OF THE DRAWINGS

Fig. 1 is a diagram illustrating the concept of the POS system of a preferred embodiment of the present invention.

Fig. 2 is a diagram illustrating a structure of the POS system of the present embodiment.

Fig. 3 is a diagram illustrating contents of the price information file of the present embodiment.

Fig. 4 is a diagram illustrating the rank determination condition of the present embodiment.

Fig. 5 is a diagram illustrating contents of the customer file of the present invention.

Fig. 6 is a flowchart illustrating the service providing process sequence of the present embodiment.

Fig. 7 is a flowchart (2) of Fig. 6 of the present invention.

Fig. 8 is a diagram illustrating an example of receipt issued to a customer A.

Fig. 9 is a diagram illustrating an example of receipt issued to a customer B.

Fig. 10 is a diagram illustrating the rank determination standard for offering the rank in the present embodiment.

Fig. 11 is a diagram illustrating the point adding note of the present invention.

Fig. 12 is a diagram illustrating an example of receipt issued to the customer A.

Fig. 13 is a diagram illustrating an example of receipt issued to the customer B.

Fig. 14 is a diagram illustrating an example of receipt issued to a customer C.

### DETAILED DESCRIPTION OF THE PREFERRED EMBODIMENT

A preferred embodiment of the present invention will be explained. Here. an example of offering a price reduction service and a point service will be explained. but the customer services such as various price reduction notes. goods exchange notes and messages, etc. can be realized in the same manner.

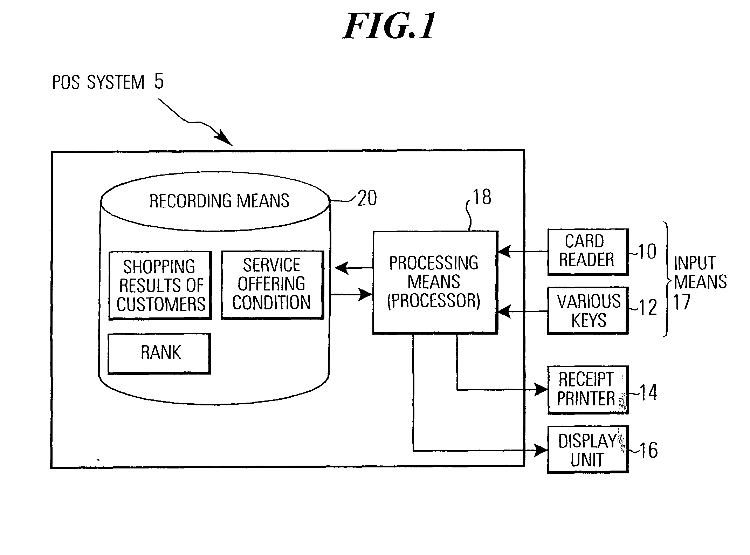

Fig. 1 is a diagram illustrating the concept of the POS system 5 of the preferred embodiment. The POS system 5 of this embodiment includes a card reader 10 for reading information recorded on a card, and various keys 12 for inputting numeral data: a receipt printer 14 for printing a receipt; a display unit 16 for displaying the name of goods, the unit price of goods and the total price at the time of payment; and a processing means 18 for executing various processes such as payment and a recording means 20 for recording various information pieces. The POS system 5 itself may be formed only of one terminal or may be composed of a combination of the POS terminal 22 and a server (not shown). The POS system 5 of this embodiment can be operated when the structure is provided in any place within the apparatus forming the system.

Since any kind of information may be input. it is possible to consider that the input means 17 is formed of the card reader 10 and various keys 12.

As an example of information to be recorded in the recording means, it is possible to list the information in regard to the goods shopping result for respective customers. information to determine the preset rank and information for making reference to the service providing condition to be provided on the basis of the rank. Details of these pieces of information pieces will be explained later in detail.

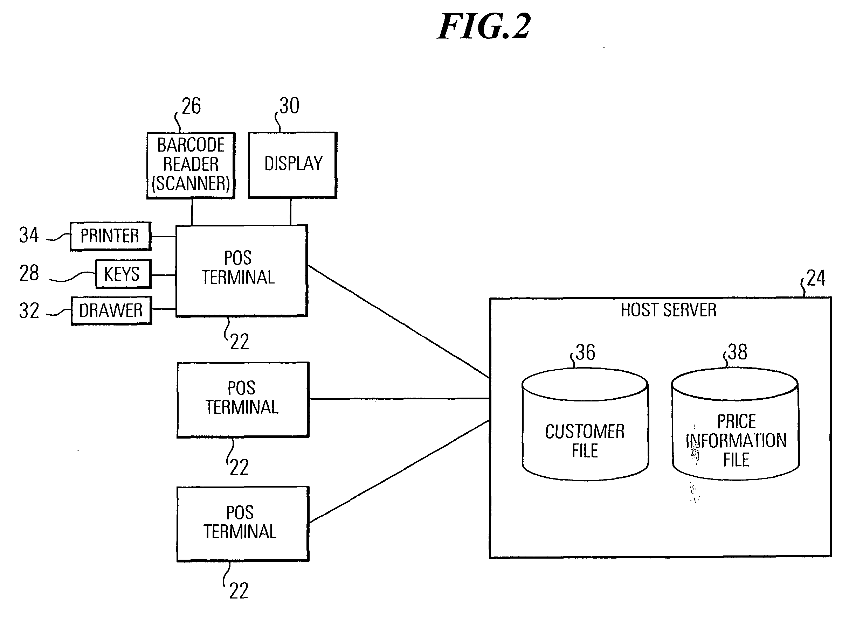

Fig. 2 is a diagram illustrating a system structure of the POS system 5 of the preferred embodiment. In this Fig., the POS terminal 22 is a terminal for making the payment for the goods purchased by the customer. Moreover, a server 24 is also connected in the host computer (not shown) of the POS terminal 22.

As illustrated in Fig. 2, the POS terminal 22 is provided with a barcode reader 26 for reading a barcode printed on the goods: various keys 28, including numeral keys and payment keys for inputting goods information: a display 30 for displaying the name of goods, the price of goods registered and a total amount; a drawer 32 for accommodating cash: and a printer 34 for printing a receipt. The structures of these devices are identical to that provided in an ordinary POS terminal and therefore further explanation of such POS terminal details is omitted here.

The host server is provided with a customer file 36 and a price information file 38. The customer file 36 allows recording of information in regard to the goods purchased by a customer registered in the shop. Moreover, as in the file employed by the ordinary POS system, the price information file 38 stores information about the prices of respective goods. The host server 24 functions to receive the sales amount and payment information generated from the POS terminal 22 and to adequately collect these pieces of information.

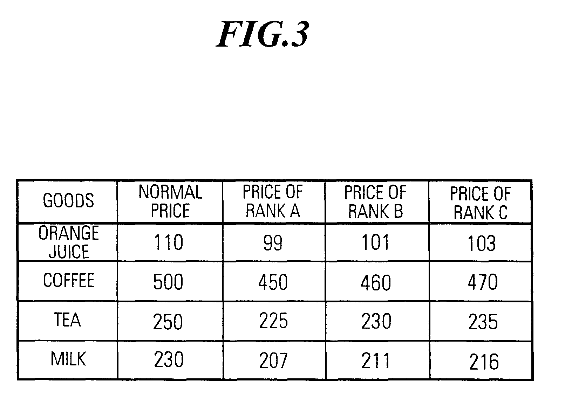

Fig. 3 is a diagram schematically illustrating the contents of the price information file 38 for this embodiment. The price information file 38 of this embodiment stores information such as name of goods and price of goods simultaneously with the goods code for identifying the goods (not illustrated). Names of goods stored in the price information file 38 are displayed on the display 30 or printed on the receipt when the goods are registered in the POS terminal 22. In addition, the prices of goods are utilized for the payment process and are displayed together with the names of goods.

In this embodiment, the price after price reduction for the particular customers is stored in addition to the usual price. In the present embodiment. the unit prices corresponding to three kinds of rank from rank A to rank C are stored. These ranks are provided depending on the shopping results of the customer for respective goods.

An example of orange juice as a purchased item, as shown in Fig. 3, will be explained. In Fig. 3, the price of orange juice is 110 yen. Meanwhile, the unit price for rank A is 99 yen and the unit price obtained by reducing 11 yen from the price (reduction of 10 percent) is set. In the same manner, the unit price for the rank B is 101 yen and the unit price obtained by reducing 9 yen from the price is set, while the unit price for the rank C is 103 yen and the unit price obtained by reducing 7 yen from the price is set. For the other goods, the unit price corresponding to the price and rank is set similarly.

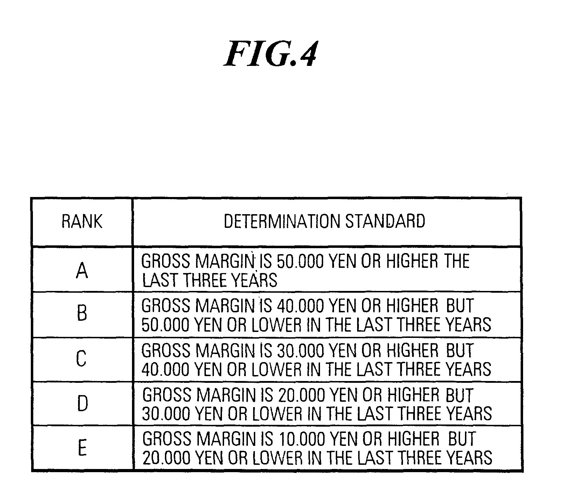

Fig. 4 is a diagram illustrating an example of the table storing the rank determination condition. In this embodiment, customer rank is set based on the shopping results (i.e.. a gross margin) in the last three years for respective customers and goods.

When the gross margin for the particular goods purchased by a customer in the last three years is higher than 50.000 yen, "rank A" is set to this goods. Moreover, if the gross margin for the particular goods is higher than 40,000 yen but is under 50,000 yen, "rank B" is set. In the same manner. when the gross margin is higher than 30.000 yen but is under 40,000 yen, "rank C" is set; when the gross margin is higher than 20,000 yen but is under 30,000 yen. "rank D" is set; and when the gross margin is higher than 10,000 yen but is under 20,000 yen. "rank E" is set.

As explained above, the rank is determined for respective customers and goods and services may be provided depending on respective rank. In this example, the ranks from the rank A to rank C are considered as the price reduction object ranks. A method of offering the rank and contents of services to be provided can be determined freely in each shop and it is naturally possible that various measures may be taken. For example, it is also possible that service is provided only for the customers of rank A. In addition, in regard to setting of the rank, the same condition is set to all goods in Fig. 4, but the amount of gross margin naturally changes depending on the price of goods. Therefore, it is also permitted to change and set the amount of gross margin corresponding to each rank for respective goods.

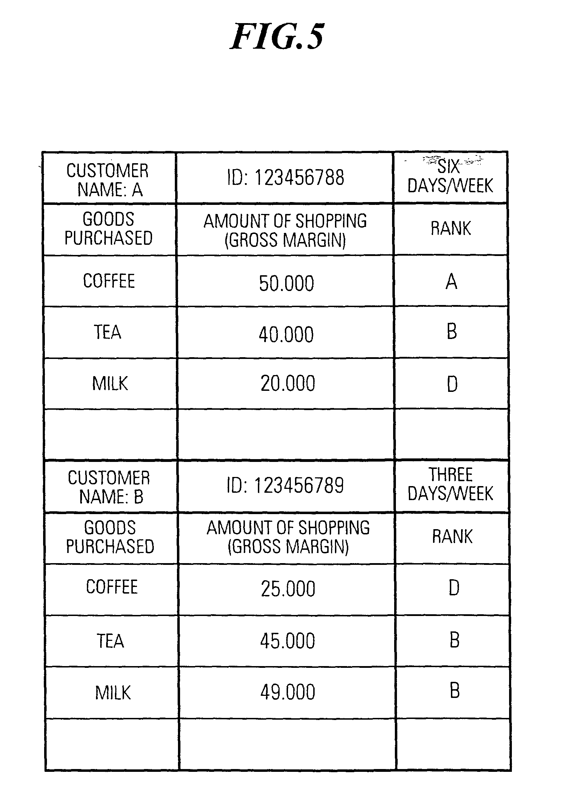

Fig. 5 is a schematic diagram illustrating contents of the customer file in this embodiment. In the customer file, the information such as shopping result of respective goods, the rank of customer for respective goods and shopping frequency are stored together with the bibliographical items such as customer name and address (not illustrated) corresponding to the information (member identification number or the like) for identifying the customers registered as the member.

For example, customer A of Fig. 5 will he explained. As the goods purchased by the customer A. "coffee", "tea", "milk" are recorded in the example of Fig. 5. Moreover. the amount of shopping (gross margin) for respective goods is also recorded and the ranks of goods are also recorded for respective goods. For example, since the gross margin of the "coffee" in the last three years as a result of shopping is "50.000 yen", the rank for "coffee" of the customer A becomes A based on the condition illustrated in Fig. 4. In the same manner, since the gross margin for "tea" is "40,000 yen", the rank for the "tea" of customer A becomes "B".

The shopping result information of the customer file is updated each time the customer shops. Therefore, the rank of respective goods is also updated depending on the shopping result at the time of shopping and when the accumulated shopping amount rises. the rank of goods also rises. Moreover, it is also probable that the rank drops when the customer does not visit the shop for a long period of time.

In the example of Fig. 5, rank is set for every kind of goods, such as coffee, etc. A method of setting the rank is not limited to that of setting the rank in unit of a kind of goods and it is also allowed to collects the results for respective brand and individual goods. In addition, the unit for offering the rank can also be expanded to the unit such as "drinks" and "clothes". Moreover, without relation to a kind of goods, such rank may also be provided for each maker. Setting the unit of the rank can be determined freely by sellers. However, if a degree of freedom for collection in the future will be increased, it is more preferable that the unit for collecting the shopping result in the customer file is determined in detail as much as possible.

Moreover, in this example, the rank is determined based on the "gross margin" in the "last three years" but it is no longer required to set the period. If setting of the period is necessary, it is no longer required to set "three years" and such period can be changed freely depending on the request of sellers and namely the period may be set in unit of week or month. Moreover, it is not required to select the "gross margin" as the factor for determining the rank setting standards and various conditions such as amount of shopping for respective goods, number of goods purchased and shopping frequency can naturally be utilized.

The differentiated services for respective customers can be provided to respective customers by utilizing such "price information file" and "customer file".

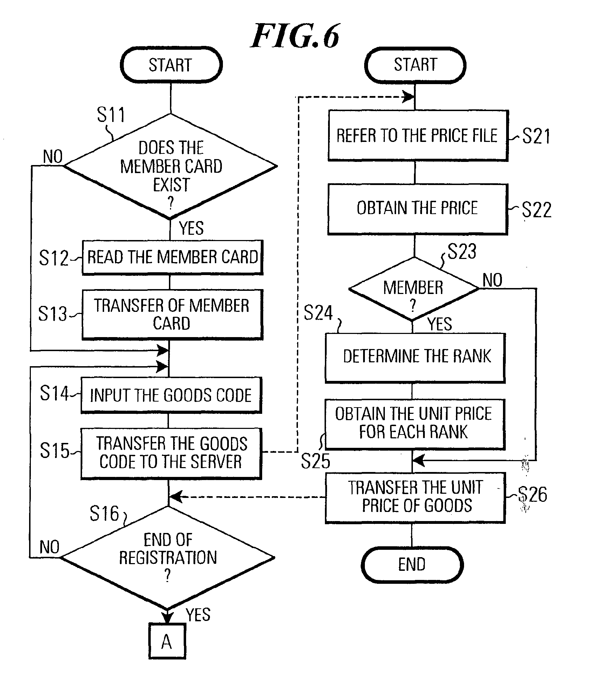

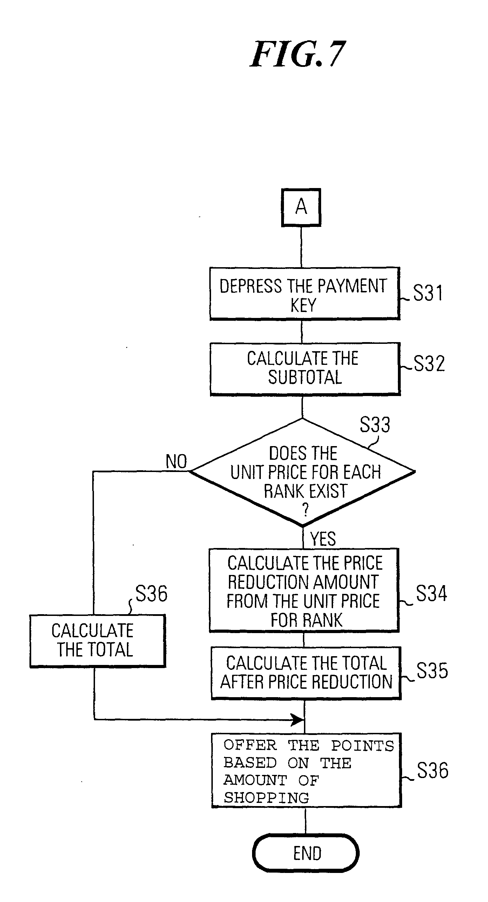

Fig. 6 and Fig. 7 are flowcharts illustrating processing sequence for providing the services of the present embodiment.

The processes executed in the shop will be explained with reference to the drawings.

First, a customer approaches the POS terminal 22 to make a payment for shopping of goods. In this case, a staff member of the shop requests the customer to present a member card. Responding to this request, the customer presents the member card to the staff of shop when the customer is a registered member of the shop.

When the customer presents the member card, the staff receives the member card to read the member card using the card reader 10 incorporated in the POS terminal 22 (S11. S12). In the member card. the member identifying information (member identification number) of the customer is recorded and the member identification number recorded on the member card is read with the card reader 10. The member ID number read out is then transferred to the host server 24 from the POS terminal 22 (S13).

The host server 24 recognizes that the member ID number is transferred from the POS terminal 22 and also recognizes that the customer is a member of the shop and that a price reduction is necessary based on the unit price for respective rank.

If the customer is not a member of the shop and does not carry the member card, the processes of S12, S13 are skipped.

Subsequently, the staff reads the barcode attached on the goods which the customer purchases (S14) using the barcode reader 26 incorporated to the POS terminal 22. In the barcode, the goods code for identifying the goods is recorded and the goods code read out is then transferred to the host server 24 from the POS terminal 22 (S15). Use of the barcode to input the goods information is only an example and therefore various methods. for example, the keying input using the keys 28 provided on the POS terminal 22, may be used.

The host server 24 refers to the price information file (S21) on the basis of the goods code transferred from the POS terminal 22 to read (S22) the unit price (price) of the goods. In this case, when the customer is a member of the shop (when the member card is received from the POS terminal 22). the host server 24 refers to the customer file 36 and determines the rank of customer for the goods using the member ID number as the key (S24). When the rank of the goods is rank A or rank C, the unit price is read from the price information file 38 depending on the rank (S25).

Subsequently, the host server 24 transfers the unit price read out to the POS terminal 22 (S26).

Thereafter, such processes are continued until payment is completed.

When the goods as the object of payment are registered, a shop staff manipulates the payment key (not illustrated) provided on the POS terminal 22 (S31).

The POS terminal 22 calculates a subtotal, in response to such manipulation, on the basis of the unit price information transferred from the host server 24.

First, the POS terminal 22 also calculates the subtotal of payment based on the price received from the host server 24 (S32). Any price reduction is not performed at this stage. Subsequently, the POS terminal 22 determines whether the unit price information depending on each rank is received or not from the host server 24 (S33).

When the unit price information is received, the price is calculated for each goods based on the unit price information and number of goods purchased and the price reduction amount is also calculated (S34).

Subsequently, the POS terminal 22 subtracts the amount of price reduction from the subtotal to calculate the total amount to be paid by the customer (S35).

Meanwhile, when the customer is not a member of the shop or does not make shopping of the goods as the object of price reduction, the total amount is calculated based on the calculated subtotal (S36). Any price reduction is not performed for this total.

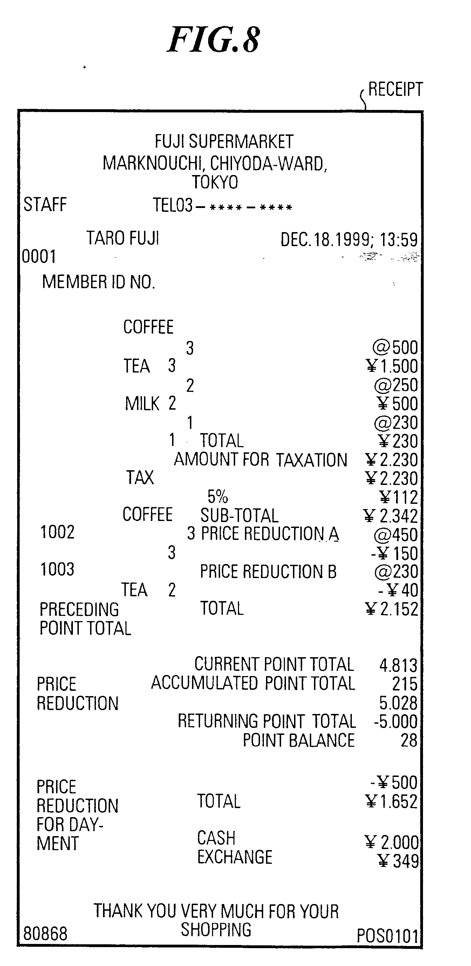

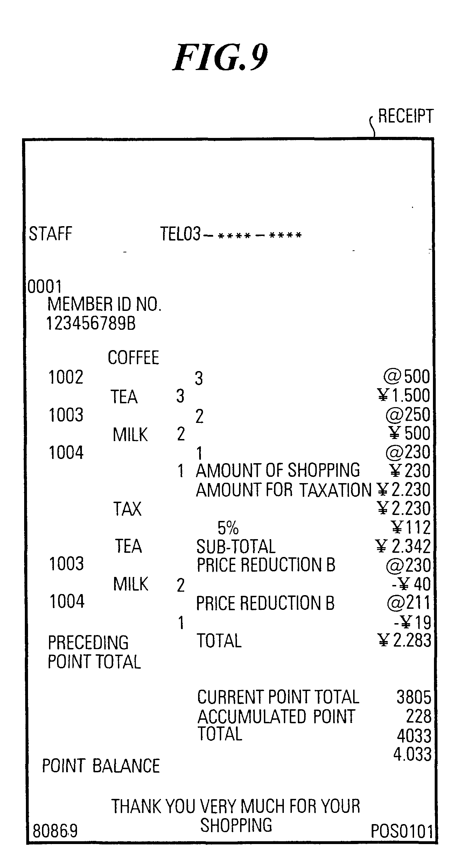

Fig. 8 and Fig. 9 are diagrams illustrating an example of the receipts issued to the customers A and B. Here, the customers A and B have purchased the same goods in this example. In more practical terms, both customers A and B have purchased three coffees in the unit price of 500 yen, two teas in the unit price of 250 yen and one milk in the unit price of 230 yen. In this case, when any price reduction is not applied, the total amount is 2330 yen and the consumption tax is 112 yen. Therefore, amount of sales is 2342 yen = (2230 yen + 112 yen).

Here. it is proved by referring to the customer file that the amount of shopping of coffee of the customer A is "50.000 yen", the rank for the coffee of this customer A becomes the rank "A". In the same manner, the amount of sales of tea is "40,000 yen" and the rank is "B". The amount of sales of milk is "20,000 yen" and the rank is "D". Therefore, the unit price of "450 yen" is applied to the coffee for the customer A and the unit price of "230 yen" to the tea, respectively. Since the rank "D" is applied to the milk, the ordinary unit price of "230 yen" is applied.

As a result, in regard to the coffee, the reduction in price is 50 yen for single goods. Here, since the customer A has purchased three coffees, the reduction in price is 150 yen = (50 yen x 3). In the same manner, in regard to the tea, the reduction in price is 20 yen for single goods. Since the customer A has purchased two goods, reduction of price is 40 yen = (20 yen x 2 yen). Therefore, total reduction of price is 150 yen + 40 yen = 190 yen and the total amount to be paid by the customer A is 2342 yen - 190 yen = 2152 yen.

On the other hand, in the case of customer B, the amount of shopping for coffee is 25,000 yen and the rank is "D". Therefore, the price of 500 yen is applied to the coffee for the customer B. Moreover, the rank of the tea and milk is respectively B and therefore the unit price of 230 yen is applied to the tea and 211 yen to the milk for the customer B. respectively.

As a result, the price reduction is 40 yen for two goods of tea as in the case of customer A. Meanwhile, the price reduction is 19 yen for single goods of milk (since single goods is purchased, total price reduction amount is 19 yen). Therefore, the total reduction of price is 59 yen = (40 yen + 19 yen). The total amount to be paid by the customer B is 2283 yen = (2342 yen - 59 yen).

As explained above, even when the same goods are purchased. it is now possible to provide the differentiated services to customers depending on the shopping results of respective goods. Therefore, sellers are capable of providing better treatment to the customers who have contributed greatly to raise the amount of sales of the shop and thereby can expect that the customers will visit the shop more often. Moreover, the shop is also capable of informing the customers, who cannot yet receive the services explained above, that they are able to receive the similar services by continuously visiting the same shop. Therefore, the shop is also capable of expecting that the customers will visit the shop repeatedly.

Returning to Fig. 7, when the shop has introduced the point system. the points generated through the transaction are calculated based on the total amount of shopping (S36). Calculation of points is performed in such a manner that one point is offered for every shopping amount, for example, of 10 yen.

Returning to Fig. 8 and Fig. 9, as will be understood from these receipts, points are offered for every instance of shopping of goods in this embodiment. Points are offered in such a manner that one point is offered for every shopping amount of 10 yen. In this case, the reference amount is the total amount after the reduction of price in the receipts of Fig. 8 and Fig. 9. In the case of the customer A, since the total amount of shopping is 2152 yen. the points total of 215 yen (2152 yen / 10) (fraction is truncated) is offered for this shopping amount and this point total is then add to the 4813 points accumulated in the past and the current total point total is updated to the new point total of 5028 (= 4813 - 215).

Moreover, in the case of customer B, since the object amount for offering the units is 2283 yen, the points total of 228 yen = (2283 yen/ 10) (fraction is truncated) is offered at this time. This total point is then added to the current point total of 3805 and the current accumulated point total becomes 4033.

In the present embodiment, when the accumulated point total reaches the predetermined amount, the predetermined amount is automatically reduced from the price. As the standard for returning the point total, 500 yen are automatically reduced for achievement of a point total of 5000.

In the case of customer A, the accumulated total point reaches 5028. Therefore, the total amount becomes 1652 by reducing 500 from the preceding total amount of 2152. The point total obtained by subtracting the returning points total corresponding to price reduction from the accumulated total point total can be recorded as the point balance.

On the other hand, in the case of customer B. the accumulated point total is 4033 and this point total is less than the point total 5000. In this case, price reduction is not served.

Here. it is also possible that automatic price reduction is performed depending on the setting or is not performed depending on the predetermined conditions.

In this embodiment, it is also possible to change the condition for offering the point total depending on the shopping amount of the customer during the particular period. Since this information is stored in the customer file in the host server side, the rank of the customer is notified to the POS terminal 22 from the host server 24 at the time of offering the point total and the POS terminal 22 issues the point total suitable for the customer based on the determined condition.

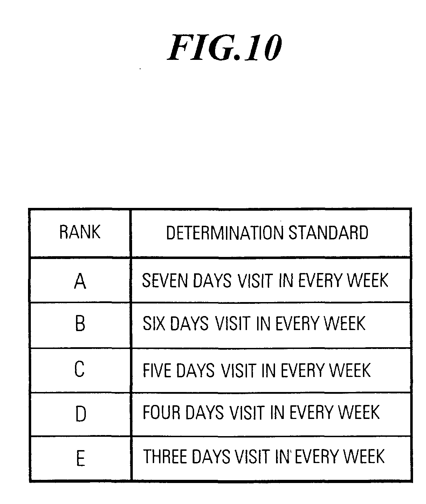

Fig. 10 is a diagram illustrating an example of the rank determination standard at the time of offering the points. In the example of Fig. 10. the shop visiting frequency in every week is related to the rank. In case a customer visits the shop 7 days in every week, the "rank A" is offered to the customer. Hereafter, the "rank B". "rank C", "rank D" and "rank E" are offered to the customer as the number of days for visit is reduced day by day. Here, any rank is never offered to the customers who visit the shop two days or less in every week.

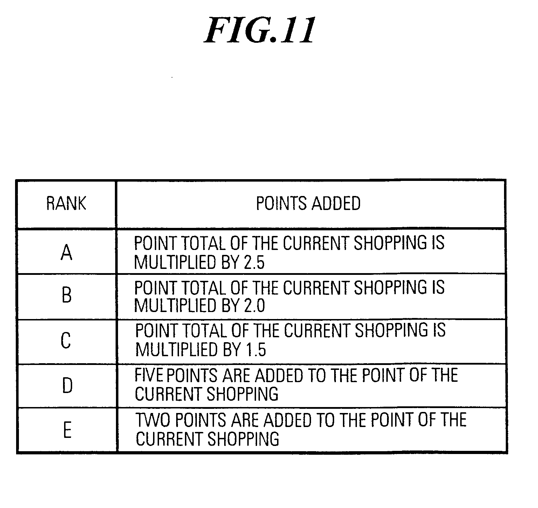

Meanwhile, Fig. 11 illustrates a point-adding note in which the point adding standard corresponding to the rank is recorded. In the case of rank A. the point total for the amount of current shopping is multiplied with 2.5. For the "rank B", the point total of current shopping amount is multiplied with 2. For the "rank C", the point total of current shopping amount is multiplied with 1.5. Moreover, for the customer of "rank D", the 5 points are added to the point of current shopping amount and for the customer E, the 2 points are added to the current shopping amount point total.

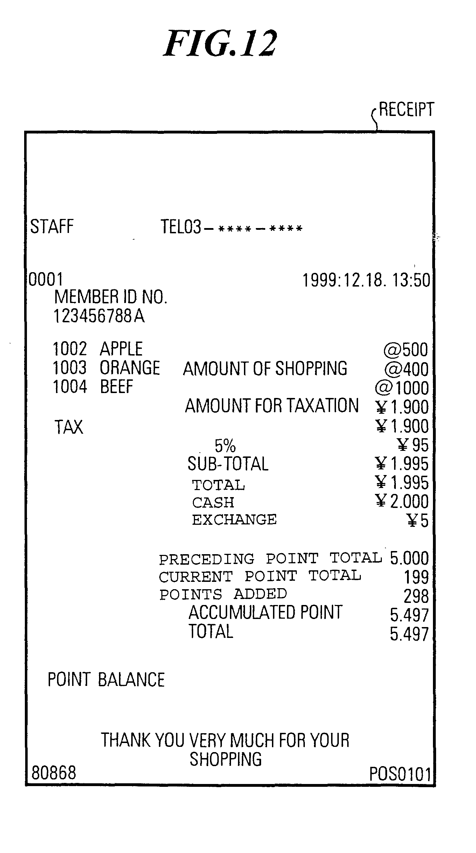

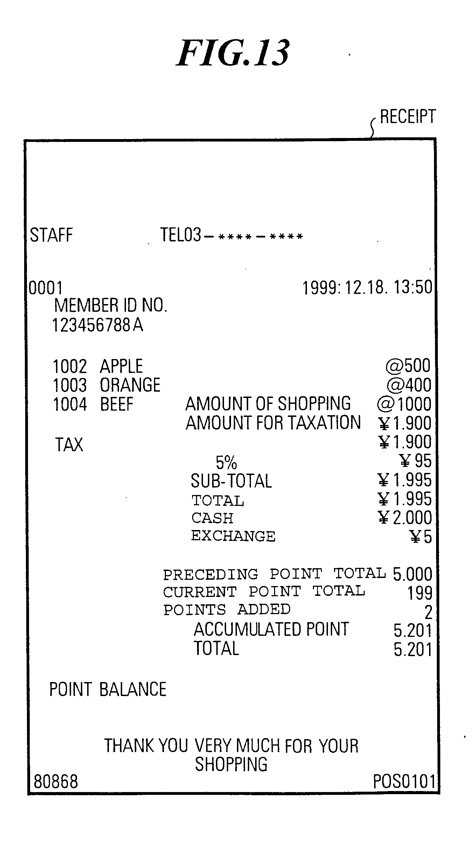

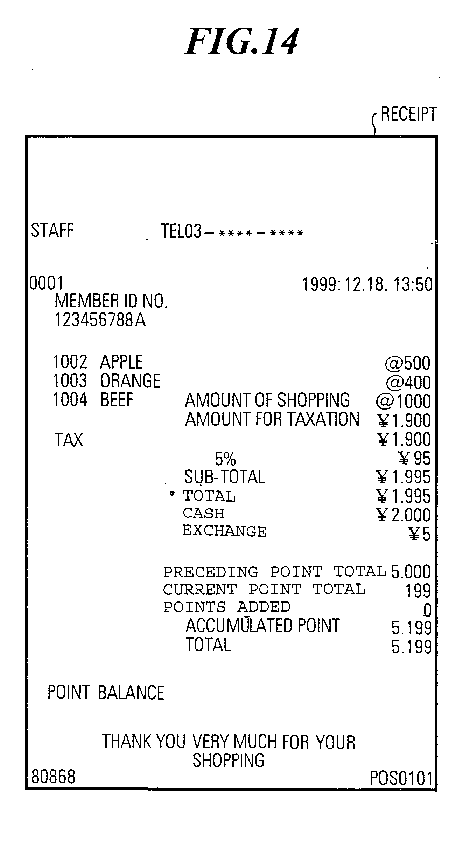

Fig. 12 to Fig. 14 illustrate respective receipts of the customers A, B and C. Here, three customers are assumed to purchase the same goods. namely apples, oranges and beef. The amount of shopping is 1995 yen for each customer. In the examples of Fig. 12 to Fig. 14. price reduction explained above is not performed to simplify the explanation.

Moreover. it is also assumed that customer A visits the shop six days in every week. customer B visits the shop three days in every week and customer C visits the shop one day in every week.

At the time of offering points through the payment for the current shopping, the host server 24 refers to the visiting frequency of the customer recorded in the customer file 36 and issues points based on the point adding condition recorded on the point adding note.

In regard to the customer A, the shopping amount is 1995 yen. Moreover, since one point is offered for the shopping amount of 10 yen. 199 points = (1995 yen ÷ 10) (fraction is truncated) are offered to customer A. The same point total is also offered to customers B and C. Subsequently, the rank of the customer A is determined. Here, since the customer A visits the shop six days in every week. the rank "B" is offered to this customer. Accordingly, the 497 points (= 199 (point for the current shopping amount) x 2.5) (fraction is truncated) are offered. Here, special adding points are 298 (= 497 - 199).

In the case of customer B, since this customer drops in the shop three days in every week, the rank "E" is offered. Therefore, point 2 is added to this customer B. Namely, points 201 (= 199 + 2) are offered to the customer B.

In the case of customer C, since this customer visits the shop only two days in every week, no rank is offered to this customer C in regard to special addition of point. Therefore, only 199 points are offered to the customer C, as are usually issued to every customer.

As explained above, on the occasion of offering points, a premium points can be offered to the customers having the higher shop visiting frequency depending on the visiting frequency of customers and, thereby, differentiated services can be offered to customers.

The number of times of visiting of customers may be detected by adding "1" to the number of times of visiting recorded in the customer file 36 when the card reader 10 reads the member card. In this case, the visiting date and time can also be recorded.

Subsequently, the POS terminal 22 edits the information to be printed on the receipt and prints the receipt to complete the process.

Moreover, the host server 24 updates the amount of shopping of respective goods and total shopping amount information of the customer file 36 based on the information of goods purchased this time by the customer and completes the process.

The price reduction service explained above can be provided steadily. Moreover, it is possible to provide the price reduction service only within the particular period by setting so-called the "dates for expressing special thanks".

In addition, it is also possible to widen the price reduction object goods to all goods in the shop and to provide the price reduction service only to the particular goods in the shop. It is also sufficiently possible to provide price reduction depending on the rank when a customer purchases drinks as the object goods limited during the period by opening the "drinks fair" with which the customer can purchase drinks at a price lower than the usual price.

Even in the case where price reduction is performed only during the particular period or in the case where price reduction is performed only for the particular goods, it is preferable that shopping results of member customers are steadily accumulated for each goods.

In addition, regarding the condition for an example of changing the point issuing condition depending on the shop visiting frequency, it is also possible to change the point offering condition in such a case that a customer has purchased the particular goods with satisfaction of the shop visiting frequency condition or that the shopping results of particular goods have satisfied the particular condition (condition illustrated in Fig. 4) with satisfaction of the shop visiting frequency condition. In such a case, only the normal point total is issued even when only the shop visiting frequency satisfies the condition for changing the issuance of point.

As explained above, according to the present invention, the service offering conditions may be changed for respective customers and thereby the differentiated services may be provided for the particular customers. Since the shopping results of customer such as amount of shopping/number of goods purchased/shopping frequency and shop visiting frequency are considered as the condition to change the services, it is now possible to provide the effectively differentiated services to the customers who are making much contribution to raise the amount of sales.

Particularly, in the case where the service providing condition is set, for example, in unit of a kind of goods, the differentiated services may be provided to good customers for the selling of particular goods and thereby it can be expected to urge the good customers to visit the shop.

## Claims

1. A sales system for making a payment for an amount of goods purchased by a customer. comprising:
a customer file for storing information to identify a customer and a shopping result information in the past for each customer;
a price file for storing the information to identify a customer and a price of goods depending on the shopping result information of a customer;
input means for inputting the customer identifying information and goods identifying information; and
processing means for determining the shopping result of the goods corresponding to said input goods identifying information by referring to said customer file based on said input customer identifying information, reading a price of said goods depending on said shopping result information and executing the payment based on the price of goods obtained.

2. A sales system for making a payment for goods purchased by a customer, comprising:
means for setting, for each kind of goods, a rank of said customer based on a shopping result information of the customer in the past;
means for recording, for each customer and goods, a rank and service providing conditions corresponding to said rank; and
means for determining the rank of said customer when the customer has shopped and executing the process for providing the service by reading the service providing conditions corresponding to said rank of said customer.

3. A sales system comprising a terminal for payment and a host computer connected to said terminal for payment, said payment terminal further comprising:
input means for inputting information for identifying a customer;
input means for inputting information for identifying goods;
transferring means for transferring said input customer identifying information and goods identifying information to said host computer and executing payment based on the goods information received from said host computer; and
means for printing a receipt delivered to a customer by hand,
wherein said host computer further comprises:
means for storing shopping result information of shopping of a customer in the past;
means for storing the goods identifying information and corresponding goods price information; and
means for referring to the shopping result information of the customer based on the received customer identifying information,
wherein said means for making the payment executes the process to provide services to said customer based on the shopping result information of said customer who is referred from said host computer and the service providing condition which is set differently depending on the shopping result information.

4. The sales system as claimed in claim 3, wherein said shopping result information of a customer is collected for each unit of particular goods and said service is provided to a customer for each unit of said particular goods.

5. The sales system as claimed in either claim 3 or claim 4, wherein when a customer purchases goods, the shopping result information of said customer is transferred to said host computer from said terminal for payment and contents of the means for storing said shopping result information is updated in said host computer based on the received shopping result information.

6. The sales system for making payment for goods purchased by a customer, comprising:
rank setting means for setting a rank of said customer based on shopping result information of the customer in the past;
means for setting the point offering conditions corresponding to said customer rank; and
offering means for offering, when the customer purchases goods, the points corresponding to the amount of shopping and determining the rank of said customer and also giving premium points in addition to the points conforming to the point offering conditions depending on the determined customer rank.

7. A service providing method, comprising the step of providing a service of which contents are set differently depending on shopping result information of said customer for each goods, when said customer purchases the goods, based on the shopping result information of said customer in the past.

8. A service providing method, comprising the steps of:
conducting a payment based on price information read out by referring to a shopping result information of a customer for each goods to be purchased by said customer when said customer shops for the goods; and
reading the price information corresponding to the shopping result information of said goods.
